# EUROPEAN PATENT APPLICATION

(11) **EP 4 668 868 A1**
(43) Date of publication of application: **24.12.2025**
(21) Application number: 24773844.6
(22) Date of filing: 21.02.2024
(51) Int. Cl.: H04W 36/30

(54) **COMMUNICATION METHOD AND COMMUNICATION APPARATUS**

(30) Priority: 21.03.2023 CN 202310305780
(71) Applicant: Huawei Technologies Co., Ltd., Shenzhen, Guangdong 518129 (CN)
(72) Inventor: WANG, Yu, Shenzhen, Guangdong 518129 (CN); LUO, Hejia, Shenzhen, Guangdong 518129 (CN); YANG, Ruonan, Shenzhen, Guangdong 518129 (CN); DU, Yinggang, Shenzhen, Guangdong 518129 (CN)
(74) Representative: Goddar, Heinz J.
(86) International application number: PCT/CN2024/077890
(87) International publication number: WO 2024/193276

(57) **Abstract**

Embodiments of this application provide a communication method and apparatus. The communication method includes: A terminal device receives first activation information, where the first activation information includes information used to activate a first cell, and the first cell is a neighbor cell of a serving cell of the terminal device at a first moment. The terminal device determines, based on the first activation information and first configuration information, whether to add the first cell to an active set, where the first configuration information includes configuration information of at least one cell within coverage of a first network device, and the at least one cell includes the first cell. In a scenario in which a neighbor cell relation changes frequently, to avoid frequent addition and/or deletion of the neighbor cell relation, the terminal device may determine, based on the first configuration information and the first activation information, whether to add the first cell to the active set, to reduce resource overheads caused by the change of the neighbor cell relation.

## Description

This application claims priority to Chinese Patent Application No. 202310305780.X, filed with the China National Intellectual Property Administration on March 21, 2023 and entitled "COMMUNICATION METHOD AND COMMUNICATION APPARATUS", which is incorporated herein by reference in its entirety.

### TECHNICAL FIELD

Embodiments of this application relate to a satellite network, and more specifically, to a communication method and a communication apparatus.

### BACKGROUND

A non-terrestrial network (non-terrestrial network, NTN) like satellite communication has significant advantages such as global coverage, long-range transmission, flexible networking, convenient deployment, and no geographical condition restriction, and has been widely applied to a plurality of fields such as maritime communication, positioning and navigation, disaster relief, scientific experiments, video broadcasting, and earth observation. A terrestrial network, a satellite network, and the like are integrated, to gather strengths and overcome a weakness, jointly form a sea-land-air-space-ground integrated communication network of global seamless coverage, and meet ubiquitous service requirements of users.

Currently, movement of a satellite causes group handover or group reselection to users corresponding to beams in a zone. Due to the movement of the satellite, a dynamic change of a cell within coverage of the satellite causes a change of a neighbor cell relation within the satellite or between different satellites.

With high-speed movement of the satellite, the neighbor cell relation of the satellite dynamically changes. If an existing neighbor cell relation maintenance mechanism is simply reused, addition or deletion is frequently performed on a neighbor cell relation table, and signaling overheads are high. Therefore, in a process of updating and maintaining the neighbor cell relation, how to ensure effectiveness of mobility management and further reduce the signaling overheads becomes a current research topic.

### SUMMARY

Embodiments of this application provide a communication method and a communication apparatus, to reduce signaling overheads for maintaining a neighbor cell relation in a scenario in which the neighbor cell relation changes.

According to a first aspect, a communication method is provided. The method may be performed by a terminal device, or may be performed by a chip, a circuit, or a module in the terminal device. This is not limited in this application. Without causing context ambiguity, the terminal device is used for description in this application.

The method includes the following steps.

The terminal device receives first activation information, where the first activation information includes information used to activate a first cell, and the first cell is a neighbor cell of a serving cell of the terminal device at a first moment. The terminal device determines, based on the first activation information and first configuration information, whether to add the first cell to an active set, where the first configuration information includes configuration information of at least one cell within coverage of a first network device, and the at least one cell includes the first cell.

According to the method provided in this application, the terminal device receives the first activation information, and determines, based on the first activation information and the first activation information, whether to add the first cell to the active set. In this application, the terminal device determines, based on the first configuration information and the first activation information, whether to add the first cell to the active set for activation. Because a movement speed of a satellite is fast, and a neighbor cell relation frequently changes, to avoid a case in which the terminal device frequently determines corresponding neighbor cell information through signaling exchange with a network device, the terminal device may directly determine, based on the first configuration information and the first activation information, whether to add the first cell to the active set, to reduce resource overheads.

It should be understood that, because configuration information of a cell within coverage of the network device may not change in a long time period, the first configuration information may be preconfigured for the terminal device, or may be sent by the network device to the terminal device by using indication information.

It should be further understood that the first activation information may directly indicate the terminal device to activate the first cell, or the terminal device activates the first cell based on some trigger conditions/events in the first activation information. This is not specifically limited in this application.

It should be further understood that the first network device may be a network device corresponding to the serving cell of the terminal device, or the first network device may be a neighbor network device (or referred to as a neighbor satellite or a terrestrial station device) of the network device corresponding to the serving cell of the terminal device. This is not specifically limited in this application.

In a possible implementation, when the first network device is a network device in the serving cell of the terminal device, both the first cell and the serving cell are within the coverage of the first network device, and the first cell may be referred to as an intra-satellite neighbor cell of the serving cell. When the first network device is not a network device in the serving cell of the terminal device, the first cell and the serving cell correspond to different network devices, and the first cell and the serving cell may be referred to as inter-satellite neighbor cells.

With reference to the first aspect, in some possible implementations, that the terminal device determines, based on the first configuration information and the first activation information, whether to add the first cell to the active set includes: The terminal device determines, based on the first configuration information and the first activation information, to add the first cell to the active set.

Based on the foregoing technical solution, when the terminal device determines, based on the first configuration information and the first activation information, that the first cell is a neighbor cell of the serving cell of the terminal device at the first moment, the terminal device adds the first cell to the active set, and the first cell waits for activation.

With reference to the first aspect, in some possible implementations, the terminal device sends first information to the serving cell, where the first information indicates that the first cell is added to the active set.

Based on the foregoing technical solution, the terminal device determines to add the first cell to the active set, and the terminal device sends the first information to the serving cell, where the first information indicates that the first cell is added to the active set.

In some possible implementations, the terminal device sends the first information to the serving cell, and the terminal device may further receive notification information from the serving cell. The notification information indicates that the first cell is added to an active set of a specific terminal device. The notification information may include service identification information, service type information, terminal device identification information, and the like.

With reference to the first aspect, in some possible implementations, the terminal device determines an activation priority of the first cell based on a vector direction between the first cell and the serving cell and a movement direction of the first network device.

Based on the foregoing technical solution, the terminal device determines the activation priority of the first cell based on the vector direction between the first cell and the serving cell and the movement direction of the first network device, so that a quantity of times of measuring a neighbor cell by the terminal device and resource overheads of the corresponding neighbor cell can be reduced.

With reference to the first aspect, in some possible implementations, when an included angle between the vector direction and the movement direction of the first network device is less than or equal to a first threshold, the activation priority of the first cell is higher than an activation priority of a second cell, and a vector direction between the second cell and the serving cell and the movement direction of the first network device are greater than or equal to a second threshold.

With reference to the first aspect, in some possible implementations, the method further includes: The terminal device sends a measurement result of the first cell to the first network device, where the measurement result includes one or more of the following:
reference signal received strength, reference signal received quality, an elevation angle of the terminal device, and a distance between the terminal device and a reference point location of the first cell.

Based on the foregoing technical solution, the terminal device adds the first cell to the active set, and performs activation measurement on the first cell. The terminal device may report the measurement result of the first cell to the first network device.

With reference to the first aspect, in some possible implementations, the terminal device receives second configuration information, where the second configuration information is used to update configuration information of the first cell.

Based on the foregoing technical solution, the terminal device receives the second configuration information, where the second configuration information is used to update the configuration information of the first cell. The second configuration information can be used to cope with interference coordination and meet requirements such as network dynamics.

It should be understood that the terminal device may periodically obtain the second configuration information. Content of the configuration information of the first cell included in the second configuration information may be the same or may be different. The terminal device may receive the second configuration information under some specific trigger conditions. For example, when the configuration information of the first cell changes, the terminal device receives the second configuration information, where the configuration information of the first cell in the second configuration information is different from configuration information of the first cell in the first configuration information.

With reference to the first aspect, in some possible implementations, configuration information of each of the at least one cell includes one or more of the following:
a cell identifier, cell frequency information, polarization information, measurement configuration information, and ephemeris-related information, where
the cell frequency information and the polarization information include one or more of the following:
   linear polarization information, circular polarization information, and elliptical polarization information;
   the measurement configuration information includes one or more of the following:
      a synchronization signal block-based measurement timing configuration SMTC periodicity, SMTC duration, an SMTC offset, a measurement gap configuration, a neighbor cell measurement priority, a frequency priority, and a polarization priority; and
      the ephemeris-related information includes one or more of the following:
         an ephemeris validity period, an ephemeris, cell service time, a cell reference point location, common timing advance information, and a cell service elevation angle.

With reference to the first aspect, in some possible implementations, the first activation information includes a bitmap, a first bit in the bitmap corresponds to the first cell, and that the terminal device determines, based on the first configuration information and the first activation information, whether to add the first cell to the active set includes:

When a value of the first bit is a first value, the terminal device determines, based on the first configuration information and the first bit, to add the first cell to the active set.

Based on the foregoing technical solution, a specific form of the first activation information may be a bitmap, a bit in the bitmap corresponds to the first cell, and a value of the bit indicates whether to add the first cell to the active set.

It should be understood that a length of the bitmap is greater than or equal to one bit. For example, when the length of the bitmap is one bit, a value of the first bit corresponding to the length of one bit indicates whether to add the first cell to the active set. When the length of the bitmap is greater than one bit, a value of a corresponding bit in the bitmap indicates whether to add the first cell to the active set.

It should be further understood that the first value may be 0 or 1. This is not specifically limited in this application.

With reference to the first aspect, in some possible implementations, the first activation information further includes a first offset of the first moment or a current moment, and the first moment is a start moment for activating the first cell.

Based on the foregoing technical solution, the first activation information includes the first offset of the first moment or the current moment. After receiving the first configuration information, the terminal device determines, based on the first configuration information and the first activation information at a moment corresponding to the first offset of the first moment or the current moment, to add the first cell to the active set.

It should be understood that the current moment may be a moment at which the terminal device obtains the first activation information.

With reference to the first aspect, in some possible implementations, the first activation information further includes a second moment or activation duration. The second moment is an end moment for activating the first cell, and the activation duration is used to determine the second moment.

Based on the foregoing technical solution, the first activation information may further include the second moment or the activation duration, indicating the end moment for activating the first cell and the activation duration.

With reference to the first aspect, in some possible implementations, the first activation information further includes status information of the first cell, where the status information includes one or more of the following:
a status of an Xn interface, a handover HO status, a status of an NG interface between a cell and a core network, and a cell access status.

With reference to the first aspect, in some possible implementations, the first activation information further includes a first condition, and that the terminal device determines, based on the first configuration information and the first activation information, whether to add the first cell to the active set includes:

When a first event meets the first condition, the terminal device determines to add the first cell to the active set. When a first event does not meet the first condition, the terminal device determines not to add the first cell to the active set.

The first event includes one or more of the following:

A latitude location of the first network device or the first cell is greater than or equal to a third threshold.

A distance between a subsatellite point location of the first network device or a subsatellite point location of the first cell and the reference point location is greater than or equal to a fourth threshold.

Based on the foregoing technical solution, the terminal device may further determine, depending on whether the first event in the first activation information meets the first condition, whether to add the first cell to the active set.

With reference to the first aspect, in some possible implementations, when the first network device is a neighbor network device of the network device in the current serving cell of the terminal device, the first event further includes:

A distance between the first network device and a second network device is less than or equal to a fifth threshold, where the second network device is a network device in the serving cell of the terminal device.

A relative distance between the first network device and the second network device is less than or equal to a sixth threshold.

With reference to the first aspect, in some possible implementations, the terminal device receives third configuration information, where the third configuration information is used by the terminal device to measure the first cell.

Based on the foregoing technical solution, the terminal device receives the third configuration information, where the third configuration information is used by the terminal device to measure the first cell. The third configuration information may include different measurement configuration parameters, and the different measurement configuration parameters are used based on different locations of the first cell to be measured, so that measurement effectiveness is improved and frequency of inter-satellite neighbor cell measurement is reduced.

With reference to the first aspect, in some possible implementations, the third configuration information includes a measurement periodicity and measurement duration.

When the first network device is a network device in the current serving cell of the terminal device, the measurement periodicity is related to a broadcast signal for initial access.

When the first network device is not a network device in the current serving cell of the terminal device, the measurement periodicity is related to a broadcast signal for handover.

Based on the foregoing technical solution, when the first network device is a network device in the current serving cell of the terminal device, in other words, when the first cell is an intra-satellite neighbor cell of the serving cell, setting of the measurement periodicity in the third configuration information is related to the broadcast signal used by the terminal device to initially access the first cell. When the first network device is not a network device in the current serving cell of the terminal device, the first cell is an inter-satellite neighbor cell of the serving cell. When the first cell is an inter-satellite neighbor cell of the serving cell, the measurement periodicity in the third configuration information is related to the broadcast signal for handover. The measurement periodicity in the third configuration information is determined depending on whether the first cell and the terminal device are inter-satellite neighbor cells or intra-satellite neighbor cells, so that effectiveness of neighbor cell measurement is improved and frequency of intra-satellite neighbor cell measurement is reduced.

It should be understood that, in the technical solution provided above, the measurement periodicity is determined based on a specific location of the first cell, so that a case in which the measurement periodicity used when the first cell and the serving cell are inter-satellite neighbor cells is a measurement periodicity of an intra-satellite neighbor cell, and the measurement periodicity is frequent, causing unnecessary measurement and resource waste is avoided.

With reference to the first aspect, in some possible implementations, the third configuration information is SMTC information.

It should be understood that when the first cell is an intra-satellite neighbor cell of the serving cell, the third configuration information is default SMTC information, and a default maximum SMTC measurement periodicity of the third configuration information is 160 milliseconds (ms). When the first cell is an inter-satellite neighbor cell of the serving cell, a measurement periodicity of SMTC information corresponding to the third configuration information may reach 160 seconds (s).

According to a second aspect, a communication method is provided. The method may be performed by a network device, or may be performed by a chip, a circuit, or a module in the network device. This is not limited in this application. Without causing context ambiguity, the network device is used for description in this application.

The method includes the following steps.

A serving network device obtains first configuration information and first activation information. The serving network device sends the first configuration information and the first activation information, where the first configuration information includes configuration information of at least one cell within coverage of a first network device, the first activation information includes information used to activate a first cell, the first cell is a neighbor cell of a serving cell of a terminal device at a first moment, and the at least one cell includes the first cell.

It should be understood that the first network device may be the serving network device, or may not be the serving network device. This is not specifically limited in this application. When the first network device is not the serving network device, the first network device may be a neighbor network device of the serving network device, and a cell within the coverage of the first network device is a neighbor cell of the serving cell of the terminal device.

According to the method provided in this application, the network device sends the first configuration information and the first activation information to the terminal device, and the terminal device further determines, based on the first configuration information and the first activation information, whether to add the first cell to an active set. In a scenario in which a satellite moves fast, a neighbor cell of the terminal device changes frequently, so that a case in which the terminal device frequently exchanges information with the network device to obtain neighbor cell information, and determines whether a neighbor cell needs to be added to the active set for activation is avoided. The terminal device may directly determine, based on the first configuration information and the first activation information, whether to add the first cell to the active set, to reduce resource overheads.

With reference to the second aspect, in some possible implementations, the serving network device receives first acknowledgment information, where the first acknowledgment information indicates whether the first configuration information and/or the first activation information are/is received.

With reference to the second aspect, in some possible implementations, the serving network device receives a measurement result of the first cell from the terminal device, where the measurement result includes one or more of the following:
reference signal received strength, reference signal received quality, an elevation angle of the terminal device, and a distance between the terminal device and a reference point location of the first cell.

With reference to the second aspect, in some possible implementations, the serving network device obtains second configuration information.

The serving network device sends the second configuration information, where the second configuration information is used to update configuration information of the first cell.

Based on the foregoing technical solution, the serving network device sends the second configuration information to the terminal device, where the second configuration information is used to update the configuration information of the first cell. This can further cope with interference coordination and meet requirements such as network dynamics.

With reference to the second aspect, in some possible implementations, configuration information of each of the at least one cell includes one or more of the following:
cell identification information, cell frequency information, cell polarization information, measurement configuration information, and ephemeris-related information, where
the cell frequency information and/or the cell polarization information include/includes one or more of the following:
   linear polarization information, circular polarization information, and elliptical polarization information;
   the measurement configuration information includes one or more of the following:
      a synchronization signal block-based measurement timing configuration SMTC periodicity, SMTC duration, an SMTC offset, a measurement gap configuration, a neighbor cell measurement priority, a frequency priority, and a polarization priority; and
      the ephemeris-related information includes one or more of the following:
         an ephemeris validity period, an ephemeris, cell service time, a cell reference point location, common timing advance information, and a cell service elevation angle.

With reference to the second aspect, in some possible implementations, the first activation information further includes a bitmap, a first bit in the bitmap corresponds to the first cell, and when a value of the first bit is a first value, the first bit indicates to add the first cell to the active set.

With reference to the second aspect, in some possible implementations, the first activation information further includes a first offset of the first moment or a current moment, and the first moment is a start moment for activating the first cell.

Based on the foregoing technical solution, the first activation information includes the first offset of the first moment or the current moment. After receiving the first configuration information, the terminal device determines, based on the first configuration information and the first activation information at a moment corresponding to the first offset of the first moment or the current moment, to add the first cell to the active set.

With reference to the second aspect, in some possible implementations, the first activation information further includes a second moment or activation duration. The second moment is an end moment for activating the first cell, and the activation duration is used to determine the second moment.

Based on the foregoing technical solution, the first activation information may further include the second moment or the activation duration, indicating the end moment for activating the first cell and the activation duration.

With reference to the second aspect, in some possible implementations, the first activation information further includes status information of the first cell, and the status information includes one or more of the following: a status of an Xn interface, a handover HO status, a status of an NG interface between a cell and a core network, and a cell access status.

With reference to the second aspect, in some possible implementations, the first activation information further includes a first condition.

When a first event meets the first condition, the first activation information indicates to add the first cell to the active set. When a first event does not meet the first condition, the first activation information indicates not to add the first cell to the active set.

The first event includes one or more of the following:
A latitude location of the first network device or the first cell is greater than or equal to a third threshold.

A distance between a subsatellite point location of the first network device or a subsatellite point location of the first cell and the reference point location is greater than or equal to a fourth threshold.

With reference to the second aspect, in some possible implementations, when the first network device is different from the serving network device, the first event further includes:

A distance between the first network device and the serving network device is less than or equal to a fifth threshold.

A relative speed between the first network device and the serving network device is less than or equal to a sixth threshold.

With reference to the second aspect, in some possible implementations, the serving network device sends third configuration information, where the third configuration information is used by the terminal device to measure the first cell.

With reference to the second aspect, in some possible implementations, the third configuration information includes a measurement periodicity and measurement duration. When the first network device is the serving network device, the measurement periodicity is related to a broadcast signal for initial access. When the first network device is not the serving network device, the measurement periodicity is related to a broadcast signal for handover.

Based on the foregoing technical solution, when the first network device is a network device in the current serving cell of the terminal device, in other words, when the first cell is an intra-satellite neighbor cell of the serving cell, setting of the measurement periodicity in the third configuration information is related to the broadcast signal used by the terminal device to initially access the first cell. When the first network device is not a network device in the current serving cell of the terminal device, the first cell is an inter-satellite neighbor cell of the serving cell. When the first cell is an inter-satellite neighbor cell of the serving cell, the measurement periodicity in the third configuration information is related to the broadcast signal for handover. The measurement periodicity in the third configuration information is determined depending on whether the first cell and the terminal device are inter-satellite neighbor cells or intra-satellite neighbor cells, so that effectiveness of neighbor cell measurement is improved and frequency of intra-satellite neighbor cell measurement is reduced.

With reference to the second aspect, in some possible implementations, the third configuration information is synchronization signal block-based measurement timing configuration SMTC information.

According to a third aspect, a communication apparatus is provided. The apparatus includes: a transceiver unit, configured to receive first activation information, where the first activation information includes information used to activate a first cell, and the first cell is a neighbor cell of a serving cell of a terminal device at a first moment; and a processing unit, configured to determine, based on the first activation information and first configuration information, whether to add the first cell to an active set, where the first configuration information includes configuration information of at least one cell within coverage of a first network device, and the at least one cell includes the first cell.

With reference to the third aspect, in some possible implementations, that the processing unit is configured to determine, based on the first configuration information and the first activation information, whether to add the first cell to the active set includes: The processing unit is further configured to determine, based on the first configuration information and the first activation information, to add the first cell to the active set.

With reference to the third aspect, in some possible implementations, the transceiver unit is further configured to send first information to the serving cell, where the first information indicates that the first cell is added to the active set.

With reference to the third aspect, in some possible implementations, the processing unit is further configured to determine an activation priority of the first cell based on a vector direction between the first cell and the serving cell and a movement direction of the first network device.

With reference to the third aspect, in some possible implementations, when an included angle between the vector direction and the movement direction of the first network device is less than or equal to a first threshold, the activation priority of the first cell is higher than an activation priority of a second cell, and a vector direction between the second cell and the serving cell and the movement direction of the first network device are greater than or equal to a second threshold.

With reference to the third aspect, in some possible implementations, the transceiver unit is further configured to send a measurement result of the first cell to the first network device, where the measurement result includes one or more of the following:
reference signal received strength, reference signal received quality, an elevation angle of the terminal device, and a distance between the terminal device and a reference point location of the first cell.

With reference to the third aspect, in some possible implementations, the transceiver unit is further configured to receive second configuration information, where the second configuration information is used to update configuration information of the first cell.

With reference to the third aspect, in some possible implementations, configuration information of each of the at least one cell includes one or more of the following:
a cell identifier, cell frequency information, polarization information, measurement configuration information, and ephemeris-related information, where
the cell frequency information and the polarization information include one or more of the following:
   linear polarization information, circular polarization information, and elliptical polarization information;
   the measurement configuration information includes one or more of the following:
      a synchronization signal block-based measurement timing configuration SMTC periodicity, SMTC duration, an SMTC offset, a measurement gap configuration, a neighbor cell measurement priority, a frequency priority, and a polarization priority; and
      the ephemeris-related information includes one or more of the following:
         an ephemeris validity period, an ephemeris, cell service time, a cell reference point location, common timing advance information, and a cell service elevation angle.

With reference to the third aspect, in some possible implementations, the first activation information includes a bitmap, a first bit in the bitmap corresponds to the first cell, and that the processing unit is configured to determine, based on the first configuration information and the first activation information, whether to add the first cell to the active set includes:

When a value of the first bit is a first value, the processing unit is configured to determine, based on the first configuration information and the first bit, to add the first cell to the active set.

With reference to the third aspect, in some possible implementations, the first activation information further includes a first offset of the first moment or a current moment, and the first moment is a start moment for activating the first cell.

With reference to the third aspect, in some possible implementations, the first activation information further includes a second moment or activation duration. The second moment is an end moment for activating the first cell, and the activation duration is used to determine the second moment.

With reference to the third aspect, in some possible implementations, the first activation information further includes status information of the first cell, where the status information includes one or more of the following:
a status of an Xn interface, a handover HO status, a status of an NG interface between a cell and a core network, and a cell access status.

With reference to the third aspect, in some possible implementations, the first activation information further includes a first condition, and that the processing unit is further configured to determine, based on the first configuration information and the first activation information, whether to add the first cell to the active set includes:

When a first event meets the first condition, the processing unit is further configured to determine to add the first cell to the active set. When a first event does not meet the first condition, the processing unit is further configured to determine not to add the first cell to the active set.

The first event includes one or more of the following:

A latitude location of the first network device or the first cell is greater than or equal to a third threshold.

A distance between a subsatellite point location of the first network device or a subsatellite point location of the first cell and the reference point location is greater than or equal to a fourth threshold.

With reference to the third aspect, in some possible implementations, when the first network device is a neighbor network device of the network device in the current serving cell of the terminal device,
the first event further includes:

A distance between the first network device and a second network device is less than or equal to a fifth threshold, where the second network device is a network device in the serving cell of the terminal device.

A relative distance between the first network device and the second network device is less than or equal to a sixth threshold.

With reference to the third aspect, in some possible implementations, the transceiver unit is further configured to receive third configuration information, where the third configuration information is used by the terminal device to measure the first cell.

With reference to the third aspect, in some possible implementations, the third configuration information includes a measurement periodicity and measurement duration.

When the first network device is a network device in the current serving cell of the terminal device, the measurement periodicity is related to a broadcast signal for initial access.

When the first network device is not a network device in the current serving cell of the terminal device, the measurement periodicity is related to a broadcast signal for handover.

With reference to the third aspect, in some possible implementations, the third configuration information is SMTC information.

According to a fourth aspect, a communication apparatus is provided, including:

A transceiver unit is configured to obtain first configuration information and first activation information. The transceiver unit is further configured to send the first configuration information and the first activation information, where the first configuration information includes configuration information of at least one cell within coverage of a first network device, the first activation information includes information used to activate a first cell, the first cell is a neighbor cell of a serving cell of a terminal device at a first moment, and the at least one cell includes the first cell.

With reference to the fourth aspect, in some possible implementations, the transceiver unit is configured to receive first acknowledgment information, where the first acknowledgment information indicates whether the first configuration information and/or the first activation information are/is received.

With reference to the fourth aspect, in some possible implementations, the transceiver unit is configured to receive a measurement result of the first cell from the terminal device, where the measurement result includes one or more of the following:
reference signal received strength, reference signal received quality, an elevation angle of the terminal device, and a distance between the terminal device and a reference point location of the first cell.

With reference to the fourth aspect, in some possible implementations, the transceiver unit is configured to obtain second configuration information.

The transceiver unit is configured to send the second configuration information, where the second configuration information is used to update configuration information of the first cell.

With reference to the fourth aspect, in some possible implementations, configuration information of each of the at least one cell includes one or more of the following:
cell identification information, cell frequency information, cell polarization information, measurement configuration information, and ephemeris-related information, where
the cell frequency information and/or the cell polarization information include/includes one or more of the following:
   linear polarization information, circular polarization information, and elliptical polarization information;
   the measurement configuration information includes one or more of the following:
      a synchronization signal block-based measurement timing configuration SMTC periodicity, SMTC duration, an SMTC offset, a measurement gap configuration, a neighbor cell measurement priority, a frequency priority, and a polarization priority; and
      the ephemeris-related information includes one or more of the following:
         an ephemeris validity period, an ephemeris, cell service time, a cell reference point location, common timing advance information, and a cell service elevation angle.

With reference to the fourth aspect, in some possible implementations, the first activation information further includes a bitmap, a first bit in the bitmap corresponds to the first cell, and when a value of the first bit is a first value, the first bit indicates to add the first cell to an active set.

With reference to the fourth aspect, in some possible implementations, the first activation information further includes a first offset of the first moment or a current moment, and the first moment is a start moment for activating the first cell.

With reference to the fourth aspect, in some possible implementations, the first activation information further includes a second moment or activation duration. The second moment is an end moment for activating the first cell, and the activation duration is used to determine the second moment.

With reference to the fourth aspect, in some possible implementations, the first activation information further includes status information of the first cell, and the status information includes one or more of the following: a status of an Xn interface, a handover HO status, a status of an NG interface between a cell and a core network, and a cell access status.

With reference to the fourth aspect, in some possible implementations, the first activation information further includes a first condition.

When a first event meets the first condition, the first activation information indicates to add the first cell to the active set. When a first event does not meet the first condition, the first activation information indicates not to add the first cell to the active set.

The first event includes one or more of the following:
A latitude location of the first network device or the first cell is greater than or equal to a third threshold.

A distance between a subsatellite point location of the first network device or a subsatellite point location of the first cell and the reference point location is greater than or equal to a fourth threshold.

With reference to the fourth aspect, in some possible implementations, when the first network device is different from a serving network device, the first event further includes:

A distance between the first network device and the serving network device is less than or equal to a fifth threshold.

A relative speed between the first network device and the serving network device is less than or equal to a sixth threshold.

With reference to the fourth aspect, in some possible implementations, the transceiver unit is configured to send third configuration information, where the third configuration information is used by the terminal device to measure the first cell.

With reference to the fourth aspect, in some possible implementations, the third configuration information includes a measurement periodicity and measurement duration. When the first network device is the serving network device, the measurement periodicity is related to a broadcast signal for initial access. When the first network device is not the serving network device, the measurement periodicity is related to a broadcast signal for handover.

With reference to the fourth aspect, in some possible implementations, the third configuration information is synchronization signal block-based measurement timing configuration SMTC information.

According to a fifth aspect, a communication apparatus is provided. The apparatus includes units or modules such as a processing unit and/or a transceiver unit that are configured to perform the method in any one of the first aspect and the second aspect and any possible implementation of the first aspect and the second aspect.

In an implementation, the apparatus is a communication device, for example, a terminal device or a network device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is the chip, the chip system, or the circuit used in the communication device, a communication unit may be an input/output interface, an interface circuit, an output circuit, an input circuit, a pin, a related circuit, or the like of the chip, the chip system, or the circuit; and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method in any one of the possible implementations of the first aspect and the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device, for example, a terminal device or a network device.

In another implementation, the apparatus is a chip, a chip system, or a circuit used in a communication device.

According to a seventh aspect, this application provides a processor. The processor is configured to perform the methods provided in the foregoing aspects. Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to an eighth aspect, a computer-readable storage medium is provided. The computer-readable medium stores program code to be executed by a device. The program code is used to execute the method according to any one of the possible implementations in the first aspect and the second aspect.

According to a ninth aspect, a computer program product including instructions is provided. When the computer program product runs on a computer, the computer is enabled to perform the method according to any one of the possible implementations of the first aspect and the second aspect.

According to a tenth aspect, a communication system is provided, and includes a terminal device and a network device. The terminal device may perform the method according to the first aspect, and the network device may perform the method according to the second aspect.

### BRIEF DESCRIPTION OF DRAWINGS

FIG. 1 is a diagram of a satellite communication system according to an embodiment of this application;
FIG. 2 is a diagram of a beam hopping satellite communication system according to an embodiment of this application;
FIG. 3 is a diagram of a group handover scenario according to an embodiment of this application;
FIG. 4 is a diagram of a dynamic change of a neighbor cell relation caused by satellite movement according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is another diagram of a dynamic change of a neighbor cell relation caused by satellite movement according to an embodiment of this application;
FIG. 9 is another diagram of a dynamic change of a neighbor cell relation caused by satellite movement according to an embodiment of this application;
FIG. 10 is a block diagram of a communication apparatus according to an embodiment of this application; and
FIG. 11 is a block diagram of another communication apparatus according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a non-terrestrial network (non-terrestrial network, NTN) system like a satellite communication system, a high altitude platform station (high altitude platform station, HAPS) communication system, or a drone, an integrated communication and navigation (integrated communication and navigation, IcaN) system, a global navigation satellite system (global navigation satellite system, GNSS), and an ultra-dense low-orbit satellite communication system. The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

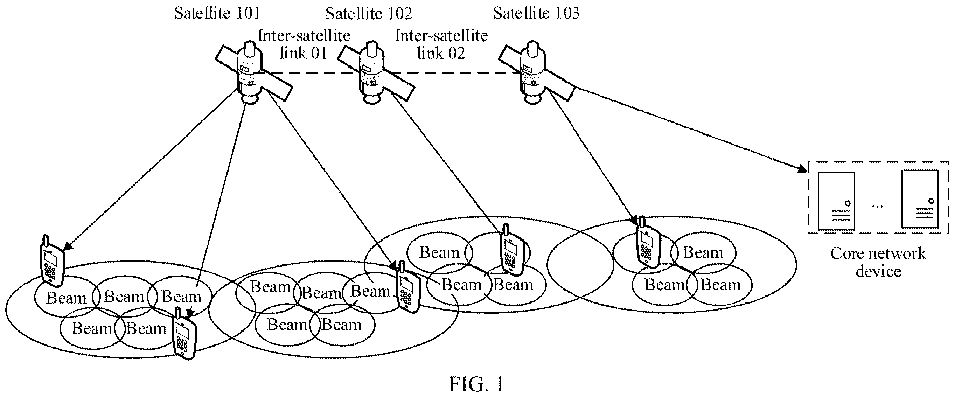

The satellite communication system includes a user equipment (UE) and a network device. The user equipment may also be referred to as a user terminal, a mobile station, or the like. The network device may include one or more satellites and one or more terrestrial station devices. The terrestrial station device may also be referred to as a core network device. The satellite may be a low earth orbit (low earth orbit, LEO) satellite, a non-geostationary orbit (non-geostationary earth orbit, NGEO) satellite, or the like. FIG. 1 is a diagram of a satellite communication system according to an embodiment of this application. The satellite communication system includes a satellite 101, a satellite 102, and a satellite 103. Each satellite may provide a communication service, a navigation service, a positioning service, and the like for a terminal device by using a plurality of beams. A satellite in this scenario is a LEO satellite. The satellite 103 is connected to a terrestrial station device. The satellite uses a plurality of beams to cover a service zone, and different beams may be used for performing communication in one or more manners of time division, frequency division, and space division. The satellite performs wireless communication with the terminal device by using a broadcast communication signal, a navigation signal, and the like. The satellite may perform wireless communication with the terrestrial station device. The satellite mentioned in this embodiment of this application may be a satellite base station, may include an orbit receiver or a repeater configured to relay information, or may be a network side device mounted on the satellite.

The terminal device in this embodiment of this application may refer to various handheld devices, vehicle-mounted devices, wearable devices, or computing devices that have a wireless communication function, or other processing devices connected to a wireless modem, and may be specifically a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like. This is not limited in this embodiment of this application.

The terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears data services, and the like. The CN may further include network elements such as an access and mobility management network element (Access and Mobility Management Function, AMF), a session management network element (Session Management Function, SMF), an authentication server network element (Authentication Server Function, AUSF), a policy control node (Policy control Function, PCF), and a user plane function network element (User Plane Function, UPF). The AMF network element is configured to manage access and mobility of the UE, and is mainly responsible for functions such as UE authentication, UE mobility management, and UE paging.

A network device in this embodiment of this application may be a device configured to communicate with the terminal device. The network device may be an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The network device may alternatively be a gNB, a TRP, or a TP in a 5G system, or one antenna panel or a group of antenna panels (including a plurality of antenna panels) of a base station in the 5G system. In addition, the network device may alternatively be a network node that forms a gNB or a TP, for example, a BBU, a distributed unit (distributed unit, DU), or the like. Alternatively, the network device may be a device responsible for a network side function in a device-to-device (device-to-device, D2D) communication system, a machine to machine (machine to machine, M2M) communication system, an internet of things (Internet of Things, IoT) communication system, an internet of vehicles communication system, or another communication system. Alternatively, the network device may be a base station (Base Transceiver Station, BTS) in a global system for mobile communications (Global System for Mobile communications, GSM) or code division multiple access (Code Division Multiple Access, CDMA) system, may be a base station (NodeB, NB) in a wideband code division multiple access (Wideband Code Division Multiple Access, WCDMA) system, may be an evolved NodeB (Evolved NodeB, eNB, or eNodeB) in an LTE system, may be a base station (next Generation NodeB, gNB) in the 5G system, or may be a radio controller in a cloud radio access network (Cloud Radio Access Network, CRAN) scenario. Alternatively, the network device may be a relay station, an access point, a vehicle-mounted device, a wearable device, a network device in a future 6G network, a network device in a future evolved PLMN network, or the like. This is not limited in this embodiment of this application.

Based on specific forms that may occur in the terminal device and the network device in this application, in an example, FIG. 1 is the diagram of the satellite communication system according to this application. The communication system includes the satellite 101, the satellite 102, and the satellite 103. Each satellite may provide a communication service and a positioning service for a mobile station by using a plurality of beams. The satellite 103 is connected to a core network device. The satellite may be a LEO satellite, a MEO satellite, a GEO satellite, or the like. The mobile station in this application may include various handheld devices, vehicle-mounted devices, wearable devices, or computing devices that have a wireless communication function, or another processing device connected to a wireless modem. The mobile station may alternatively be a subscriber unit, a cellular phone, a smartphone, a wireless data card, a personal digital assistant computer, a tablet computer, a wireless modem, a handheld device, a laptop computer, a machine type communication terminal, or the like.

In the satellite communication system, a single satellite covers a wide range of thousands of kilometers or even tens of thousands of kilometers, and a single beam covers a minimum range of dozens of kilometers or even several kilometers. Therefore, to support wide-zone coverage, hundreds or even thousands of beams usually need to be configured for the single satellite. This poses a great challenge to load of the satellite, especially a LEO satellite. To alleviate a contradiction between low load and wide coverage of the single satellite, a beam hopping satellite communication system emerges correspondingly.

In this application, the beam hopping satellite system is mainly used as an example to describe a method provided in this application. This application may be further applied to an earth moving (earth moving) satellite system, a quasi-earth fixed (quasi-earth fixed) satellite system, or another satellite system. Examples are not provided one by one in this application.

In the beam hopping satellite system, only a few beams (for example, dozens of beams) are configured for the single satellite, and the beams serve all coverage zones of the single satellite in a time division manner.

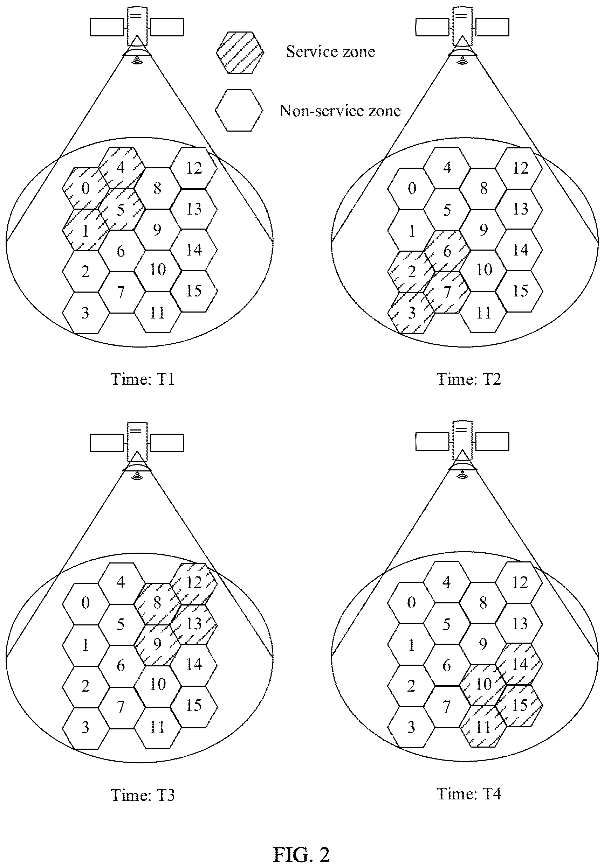

FIG. 2 is a diagram of a beam hopping satellite communication system according to an embodiment of this application. As shown in FIG. 2, a satellite can form only four beams at a same moment. At a moment T1, four beams 0, 1, 4, and 5 are used to cover zones (namely, beam positions) corresponding to the beams. At a moment T2, four beams 2, 3, 6, and 7 are used to cover zones corresponding to the beams. This rule applies. All zones (namely, zones corresponding to 16 beams) covered by the single satellite are served in a time division manner of T1, T2, T3, and T4.

In the beam-hopping satellite communication system, movement of a satellite node causes group handover (for a UE in a connected state) or group reselection (for a UE in an idle state) to users in a beam position in a specific zone.

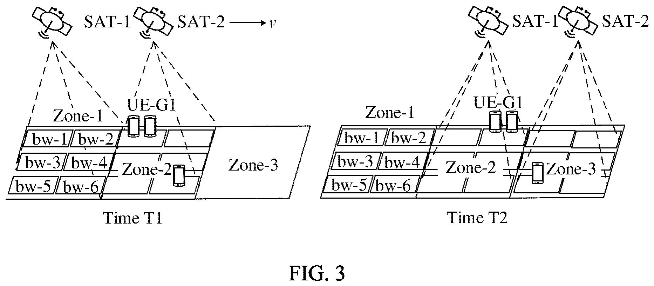

The group handover is used as an example. As shown in FIG. 3, there is a UE cluster, namely, a UE-G1 (the UE-G1 includes a plurality of UEs) in a single beam position in a zone Zone-2. At time T1, the UE-G1 is served by one or more beams of a satellite SAT-2. At time T2, the beam position cannot be served due to movement of the satellite SAT-2, and the UE-G1 is served by one or more beams of a satellite SAT-1. Therefore, the UE cluster UE-G1 performs group handover. In addition, because the satellite moves at a high speed of about 7.5 km/s, frequency of the group handover is about once/several seconds to dozens of seconds.

In other words, in a beam hopping LEO satellite network, group handover caused by network movement becomes normal. From the Time T1 to T2, a UE-G1 group in a SAT-2 service zone triggers broadcast beam measurement for a neighbor satellite, for example, synchronization signal block-based measurement timing configuration (synchronization signal block-based measurement timing configuration, SMTC) measurement, referred to as SMTC measurement for short, and performs handover/reselection.

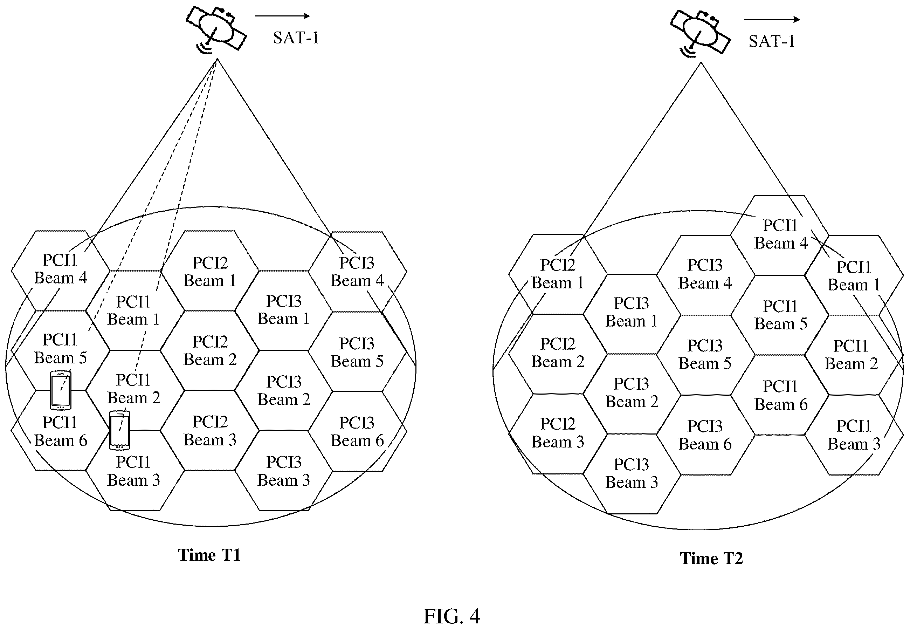

In addition, the network movement causes a dynamic change of a neighbor cell relation. As shown in FIG. 4, from time T1 to T2, broadcast beams in a satellite/base station change. At the moment T1, an arrangement (from left to right) of cells in a SAT-1 is sequentially a PCI1, a PCI2, and a PCI3. Beam coverage (for example, a beam quantity and/or a beam shape) in different physical cell identifiers (physical cell identifiers, PCIs) may be different. At the moment T2, because the satellite cannot continue to stare/serve an original zone corresponding to the PCI1, the PCI1 serves a zone (corresponding to a right zone corresponding to the SAT-1) that the satellite newly enters. In this case, the arrangement (from left to right) of the cells in the SAT-1 changes to the PCI2, the PCI3, and the PCI1. It can be learned that a dynamic change of a cell within coverage of a satellite causes a change of a neighbor cell relation within the satellite or between different satellites.

To resolve the foregoing problem that network movement causes a dynamic change of a neighbor cell relation, currently, the neighbor cell relation is mainly managed by a network device (for example, a base station) by using an automatic neighbor cell relation (automatic neighbor relation, ANR) function.

Specifically, the ANR includes a neighbor cell addition function (adding a new neighbor cell) and a neighbor cell removal function (removing an existing neighbor cell). The neighbor cell addition function is implemented by exchanging a measurement report between the network device and a terminal device, and a neighbor cell relation table (neighbor cell relation table, NCRT) is maintained on the network device side to record a neighbor cell attribute.

It should be understood that a neighbor cell attribute supported by an NR protocol includes No Remove, No HO, and No X2. No Remove indicates whether a current neighbor cell can be removed. No HO indicates whether the current neighbor cell can be used for handover. No X2 indicates whether an X2 interface can be established with the current neighbor cell.

According to the foregoing method for managing the neighbor cell relation by using the ANR function, in a beam hopping satellite network, a neighbor cell relation of a satellite dynamically changes as a satellite node moves at a high speed. Consequently, the ANR frequently performs neighbor cell relation addition and deletion, causing high signaling overheads.

For the foregoing technical problem, this application provides a communication method, to resolve a technical problem of high signaling overheads caused by a change of a neighbor cell relation in a scenario in which the neighbor cell relation is frequently added and/or deleted.

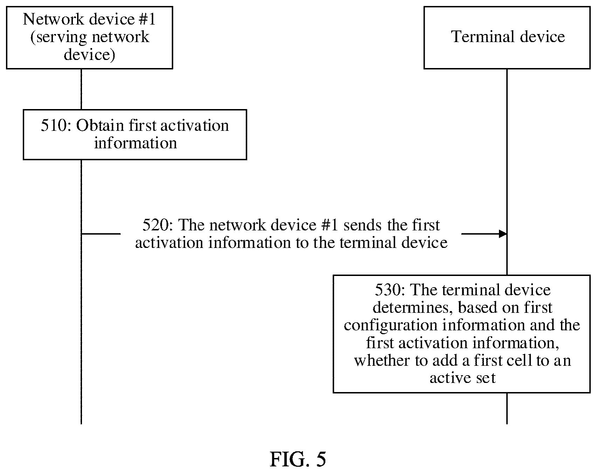

FIG. 5 is a schematic flowchart of a communication method according to an embodiment of this application. As shown in FIG. 5, the method includes the following steps.

510: A network device #1 obtains first activation information.

The network device #1 is a network device that currently provides a service for a terminal device, or referred to as a serving network device.

The first activation information includes information used to activate a first cell.

It should be understood that, when the first cell and a current serving cell of the terminal device are within coverage of the same network device, the network device #1 may obtain the first activation information based on at least one cell within the coverage. When the first cell is a cell within coverage of another network device (for example, a network device #2), the network device #1 is different from the network device #2, the first cell is a cell within the coverage of the network device #2, and the serving cell is a cell within the coverage of the network device #1, the network device #1 obtains the first activation information from the network device #2.

In a possible implementation, due to movement of the network device, a neighbor cell relation of the terminal device changes. A neighbor cell corresponding to the serving cell of the terminal device may change from a cell #1 to a cell #2. When the cell 1 and the cell #2 both are cells within the coverage of the network device #1, step 510 may be that the network device #1 obtains the first activation information from a cell within the coverage, or that the network device #1 determines the first activation information. When the cell #1 is a cell within the coverage of the network device #1, and the cell #2 is a cell within the coverage of the network device #2, the first activation information may be obtained by the network device #1 from the network device #2.

520: The network device #1 sends the first activation information to the terminal device.

Correspondingly, the terminal device receives the first activation information sent by the network device #1.

Specifically, after the network device #1 obtains the first activation information, the network device #1 sends the first activation information to the terminal device.

In a possible implementation, the network device #1 sends first configuration information and the first activation information to the terminal device.

It should be understood that the first configuration information may be sent by the network device #1 to the terminal device, or the first configuration information may be preconfigured and does not need to be sent by the network device #1 to the terminal device. For a specific example, refer to descriptions in the following step 511 and step 512. Details are not described herein.

530: The terminal device determines, based on the first configuration information and the first activation information, whether to add the first cell to an active set.

Specifically, after the terminal device receives the first activation information from the network device #1, the terminal device determines, based on the first configuration information and the first activation information, whether to add the first cell to the active set.

It should be understood that the first configuration information includes configuration information of at least one cell within coverage of a first network device, the at least one cell includes the first cell, and the first cell is a neighbor cell of the serving cell of the terminal device at a first moment. The first activation information includes the information used to activate the first cell.

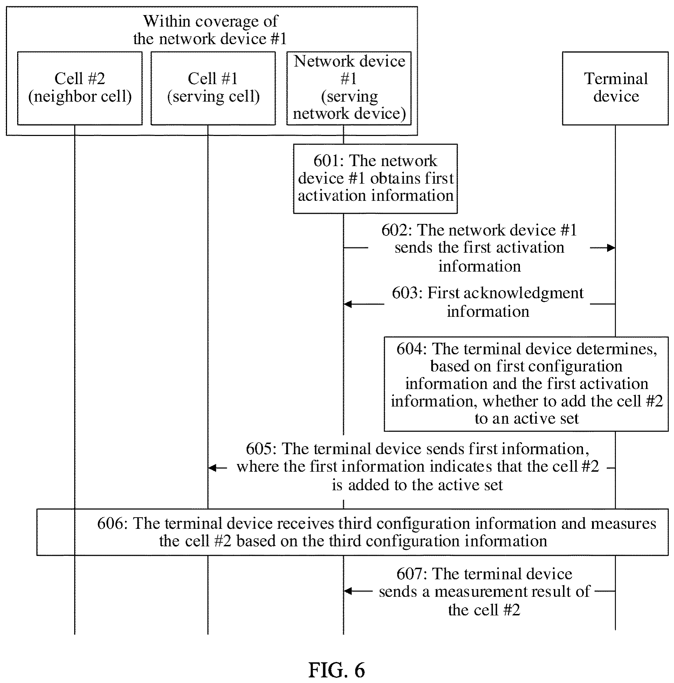

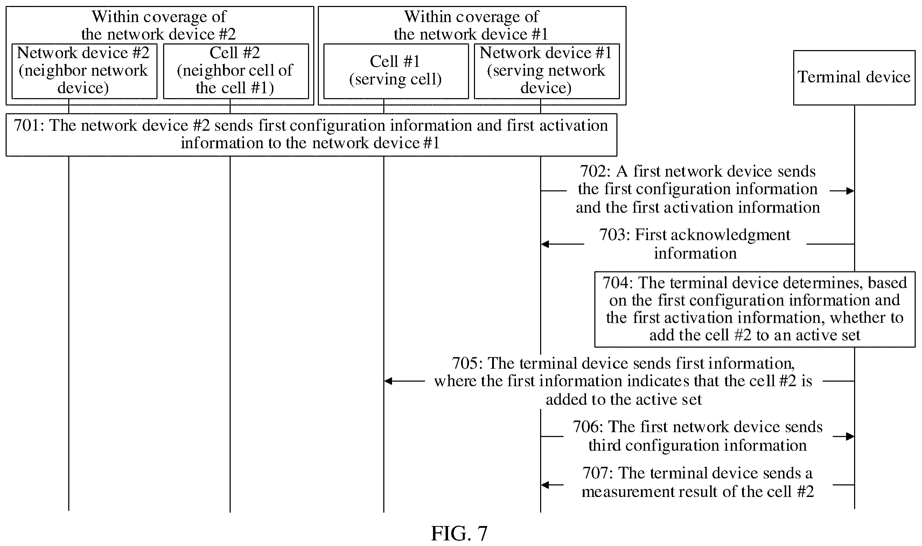

In a possible implementation, the first cell is a neighbor cell of the serving cell of the terminal device at the first moment, and the terminal device determines, based on the first configuration information and the first activation information, to add the first cell to the active set. The terminal device performs neighbor cell activation on a cell included in the active set. A specific implementation in which the terminal device activates the cell in the active set may be determined based on an activation priority of the cell in the active set. For a specific example, refer to examples in FIG. 6 and FIG. 7. Details are not described herein.

The terminal device may determine the first configuration information in the following two manners:
Manner 1: The first configuration information is preconfigured for the terminal device. In this case, after receiving the first activation information, the terminal device directly determines, based on the first configuration information and the first activation information, whether to add the first cell to the active set.
   The configuration information of the at least one cell within the coverage of the first network device may not change in a long time period. Therefore, the first configuration information may be preconfigured for the terminal device.
Manner 2: The first configuration information is sent by the network device #1 to the terminal device. In this case, after receiving the first configuration information and the first activation information, the terminal device determines, based on the first configuration information and the first activation information, whether to add the first cell to the active set.

In a case of Manner 2, the method shown in FIG. 5 may further include the following steps.

511: The network device #1 obtains the first configuration information.

When the first network device is the network device #1, the first cell and the serving cell that currently provides the service for the terminal device are within the coverage of the same network device, and the network device #1 may obtain the first configuration information based on the at least one cell within the coverage. When the first network device is the network device #2, the first cell is a cell within the coverage of the network device #2, and the serving cell is a cell within the coverage of the network device #1, the network device #1 obtains the first configuration information from the network device #2.

In a possible implementation, due to the movement of the network device, the neighbor cell relation of the terminal device changes. The neighbor cell corresponding to the serving cell of the terminal device may change from the cell #1 to the cell #2. When the cell 1 and the cell #2 both are cells within the coverage of the network device #1, step 511 may be that the network device #1 obtains the first configuration information from a cell within the coverage, or that the network device #1 determines the first configuration information. When the cell #1 is a cell within the coverage of the network device #1, and the cell #2 is a cell within the coverage of the network device #2, the first configuration information may be obtained by the network device #1 from the network device #2.

It should be further understood that the first configuration information may include the configuration information of the at least one cell within the coverage of the first network device. Configuration information of each of the at least one cell includes one or more of the following: cell identification information, cell frequency information, cell polarization information, measurement configuration information, ephemeris-related information, and the like.

The cell frequency information and/or the cell polarization information include/includes one or more of the following: linear polarization information, circular polarization information, elliptical polarization information, and the like. The measurement configuration information includes one or more of the following: a measurement timing configuration based on other reference signals such as a synchronization signal block and/or a channel state information reference signal (channel state information reference signal, CSI-RS), for example, an SMTC periodicity, SMTC duration, an SMTC offset, a measurement gap configuration, a neighbor cell measurement priority, a frequency priority, and a polarization priority. The ephemeris-related information includes one or more of the following: an ephemeris validity period, an ephemeris, cell service time, a cell reference point location, common timing advance information, a cell service elevation angle, and the like.

512: The network device #1 sends the first configuration information to the terminal device.

Correspondingly, the terminal device receives the first configuration information sent by the network device #1.

It should be noted that there is no limitation on a sequence between steps 511 and 512 and steps 510 and 520. Step 511 and step 510 may occur simultaneously, in other words, the network device #1 may obtain the first configuration information and the first activation information simultaneously, or the first configuration information and the first activation information may be included in a same piece of signaling for transmission. Step 512 and step 520 may occur simultaneously, in other words, the network device #1 may send the first configuration information and the first activation information simultaneously, or the network device #1 may perform transmission of the first configuration information and the first activation information by using a same piece of signaling.

According to the method shown in FIG. 5, the network device #1 obtains the first activation information, and sends the first activation information to the terminal device. Due to mobility of the network device, the neighbor cell relation of the terminal device changes, and the terminal device determines, based on the first configuration information and the first activation information, whether to add the first cell to the active set. When the terminal device determines to add the first cell to the active set, the terminal device activates the first cell in the active set based on the first activation information. In comparison with a conventional technology in which frequent change of the neighbor cell relation causes the network device and the terminal device to exchange signaling frequently to maintain the neighbor cell relation, in this application, the terminal device determines, based on the first activation information and the first configuration information, whether the first cell needs to be added to the active set, so that a problem of high resource overheads caused by the change of the neighbor cell relation between the terminal device and the network device is avoided.

Based on the method shown in FIG. 5, the following describes in detail the communication method provided in this application with reference to FIG. 6 and FIG. 7 by using an example in which the serving cell of the terminal device is the cell #1, a network device corresponding to the cell #1 is the network device #1, and a neighbor cell of the cell #1 is the cell #2.

FIG. 6 is a schematic flowchart of another communication method according to an embodiment of this application.

601: A network device #1 obtains first activation information.

The first activation information includes information used to activate a cell #2.

It should be understood that the cell #2 is a neighbor cell of a cell #1 at a moment T1.

602: The network device #1 sends the first activation information to a terminal device.

Correspondingly, the terminal device receives the first activation information from the network device #1.

It should be understood that step 601 and step 602 are similar to step 510, step 520, step 511, and step 512 in FIG. 5. For details, refer to the descriptions in step 510, step 520, step 511, and step 512. Details are not described herein again.

603: The terminal device sends first acknowledgment information to the network device #1.

Correspondingly, the network device #1 receives the first acknowledgment information from the terminal device.

The first acknowledgment information indicates whether the terminal device receives first configuration information from the network device #1, or the first acknowledgment information indicates whether the terminal device receives the first configuration information and the first activation information from the network device #1, or the first acknowledgment information indicates whether the terminal device receives the first activation information from the network device #1.

604: The terminal device determines, based on the first configuration information and the first activation information, whether to add the cell #2 to an active set.

Specifically, after the terminal device receives the first activation information from the network device #1, the terminal device determines, based on the first configuration information and the first activation information, whether to add the cell #2 to the active set.

It should be understood that the first configuration information includes configuration information of at least one cell within coverage of the network device #1, and cells within the coverage of the network device #1 include the cell #1 and the cell #2.

When the first activation information includes the information used to activate the cell #2, the terminal device adds, based on the first activation information and the first configuration information, the cell #2 to the active set, and the cell #2 waits for activation of the terminal device.

In a possible implementation, the first activation information further includes a bitmap, a first bit in the bitmap corresponds to the cell #2, and when a value of the first bit is a first value, the first bit indicates to add the cell #2 to the active set. A length of the bitmap may be greater than or equal to one bit (bit).

For example, assuming that the first value is 1, when the length of the bitmap is one bit, a value of the first bit is 1, and the first bit corresponds to the cell #2, the first bit is equal to the first value. In this case, the first bit in the bitmap indicates to add the cell #2 to the active set. Assuming that the first value is 0, when the length of the bitmap is one bit, a value of the first bit is 1, and the first bit corresponds to the cell #2, the first bit is not equal to the first value. In this case, the first bit in the bitmap indicates not to add the cell #2 to the active set.

For another example, assuming that the first value is 1, when the length of the bitmap is three bits, and a value of the first bit corresponding to the cell #2 is 1, the first bit is equal to the first value. In this case, the first bit indicates to add the cell #2 to the active set. Assuming that the first value is 0, when the length of the bitmap is three bits, and a value of the first bit corresponding to the cell #2 is 1, the first bit is not equal to the first value. In this case, the first bit indicates not to add the cell #2 to the active set.

In another possible implementation, the first activation information further includes an offset of a first moment or a current moment. The first moment is a start moment for activating the cell #2, and the current moment is a moment at which the terminal device obtains the first activation information.

For example, if the first moment is the moment T1, it indicates that a start location of activation time of the cell #2 corresponding to the terminal device is the moment T1. T1 may also be understood as the start moment for activating the cell #2.

It should be understood that there are a plurality of specific representation forms of the moment in this application, for example, universal time coordinated (universal time coordinated, UTC), a frame, a subframe, a slot, and a symbol position. This is not specifically limited in this application. When the moment in this application is represented in a form of UTC, the moment may be represented as month XX day XX year XX hour XX minute XX second XX, for example, December 21, 2022, 14:51:24. When the moment in this application is represented in a form of a frame, a subframe, or a slot, the moment may be identified by using a sequence number, for example, a second frame, a third subframe, or a second slot.

For another example, the first activation information includes the offset of the current moment. Assuming that the terminal device obtains the first activation information at a moment T0, the terminal device determines, based on the offset (offset) of the current moment, that the start moment of the activation time of the cell #2 is T0+offset.

In still another possible implementation, the first activation information further includes a second moment or activation duration. The second moment is an end moment for activating the cell #2, and the activation duration is used to determine the second moment.

For example, if the second moment is a moment T2, it indicates that an end location of the activation time of the cell #2 corresponding to the terminal device is the moment T2. It is assumed that the first moment is the moment T1. In a time period [T1, T2] of the cell #2, the first activation information indicates the terminal device to add the cell #2 to the active set and activate the cell #2.

For another example, when the first activation information includes the activation duration, it is assumed that the activation duration is a time period t1. It is assumed that the first moment is the moment T1. In a time period [T1, T1+t1] of the cell #2, the first activation information indicates the terminal device to add the cell #2 to the active set and activate the cell #2.

In still another possible implementation, the first activation information further includes status information of the cell #2, and the status information of the cell #2 includes one or more of the following: a status of an Xn interface, a handover HO status, a status of an NG interface between a cell and a core network, and a cell access status.

It should be understood that the first activation information further indicates, by indicating the status information of the cell #2, a criterion for the terminal device to determine whether the cell #2 can be added to the active set.

In still another possible implementation, the first activation information may further include a first condition. When a first event meets the first condition, the first activation information indicates the terminal device to add the cell #2 to the active set. When a first event does not meet the first condition, the first activation information indicates the terminal device not to add the cell #2 to the active set.

It should be understood that the first event may include one or more of the following: A latitude location of the network device #1 or the cell #2 is greater than or equal to a threshold #3. A distance between a subsatellite point location of the network device #1 or a subsatellite point location of the cell #2 and the reference point location is greater than or equal to a threshold #5.

It should be further understood that, the first event may further include: The latitude location of the network device #1 or the cell #2 is less than a threshold #3'. The distance between the subsatellite point location of the network device #1 or the subsatellite point location of the cell #2 and the reference point location is less than a threshold #4'.

As the network device moves, configuration information corresponding to a cell within the coverage of the network device may change. In this case, configuration information corresponding to the cell #2 may also change.

In an example, the network device #1 obtains second configuration information, and the network device #1 sends the second configuration information to the terminal device. The second configuration information includes the configuration information of the cell #2, and the configuration information of the cell #2 in the second configuration information is the same as or different from configuration information of the cell #2 in the first configuration information.

It should be understood that after the terminal device receives the second configuration information sent by the network device #1, the terminal device determines, based on the second configuration information and the first activation information, whether to add a first cell to the active set.

The network device #1 may periodically obtain the second configuration information, or the network device #1 may obtain the second configuration information under some preconfigured conditions, or the network device #1 may obtain the second configuration information based on some indication information. This is not specifically limited in this application.

605: The terminal device sends first information to the cell #1.

Correspondingly, the cell #1 receives the first information from the terminal device.

Specifically, after the terminal device determines, based on the first configuration information and the first activation information, to add the cell #2 to the active set, the terminal device sends the first information to the cell #1. The first information indicates that the terminal device adds the cell #2 to the active set.

In a possible implementation, after the terminal device sends the first information to the cell #1, the terminal device may further receive notification information from the cell #1. The notification information indicates that the cell #2 is added to the active set of the terminal device. The notification information may include service identification information, service type information, terminal device identification information, and the like.

It should be understood that the terminal device determines, based on the first configuration information and the first activation information, to add the cell #2 to the active set, and the terminal device further determines an activation priority of the cell #2 in the active set based on a vector direction between the cell #2 and the cell #1 and a movement direction of the network device #1.

The higher an activation priority of a cell in the active set, the earlier the terminal device activates the cell. Correspondingly, the lower an activation priority of a cell in the active set, the less likely the terminal device is to activate the cell in comparison with a cell with a higher activation priority.

In a possible implementation, when an included angle between a vector relationship and the movement direction of the network device #1 is less than or equal to a threshold #1, the activation priority of the cell #2 in the active set is higher than an activation priority of a cell #3, and a vector relationship between the cell #3 and the cell #1 and the movement direction of the network device are greater than or equal to a threshold #2.

In an example, the terminal device is located on a right west side of the coverage of the network device, the movement direction of the network device is from west to east, and a cell set corresponding to the coverage of the network device includes the cell #1, the cell #2, ..., a cell #N-1, and a cell #N from west to east in sequence, where N is a positive integer. Activation priorities in the active set that are determined by the terminal device may be in descending order. In other words, the cell #1 has a highest priority, and the cell #N has a lowest priority.

In another example, the movement direction of the network device is from west to east, and a cell set corresponding to the coverage of the network device includes the cell #1, the cell #2, ..., a cell #N-1, and a cell #N from west to east in sequence. A serving cell of the terminal device is a cell #k (k is greater than or equal to 1 and is less than or equal to N, where N is a positive integer). For the terminal device, priorities of the cell #1, ..., and a cell #k-1 may be set as the lowest, a priority of a cell #k+1 may be set as the highest, and priorities of a cell #k+2 to the cell #N gradually decrease.

606: The network device #1 sends third configuration information to the terminal device.

Correspondingly, the terminal device receives the third configuration information from the network device #1.

The third configuration information is used by the terminal device to measure the cell #2, and the third configuration information includes a measurement periodicity and measurement duration.

It should be understood that when the cell #2 and the cell #1 both are cells within the coverage of the network device #1, the third configuration information may be used by the terminal device to perform intra-satellite neighbor cell measurement on the cell #2. The third configuration information may also be referred to as intra-satellite neighbor cell measurement.

It should be further understood that, when the cell #2 and the cell #1 are within coverage of a same network device, the cell #2 and the cell #1 may be referred to as intra-satellite neighbor cells, and the measurement periodicity included in the third configuration information sent by the network device #1 is related to a broadcast signal for initial access. The network device sends the broadcast signal for initial access to the terminal device, or the terminal device receives the broadcast signal for initial access sent by the network device.

In an example, the broadcast signal for initial access is a mobility management specific synchronization signal block (synchronization signal block, SSB) signal, and the network device #1 determines the measurement periodicity based on the broadcast signal SSB signal for initial access.

The signal for initial access may be broadcast, or may be of a terminal device UE level. When the signal for initial access is of the UE level, the signal for initial access may be separately configured for each terminal device in a unicast manner, and transmission of the signal for initial access may be performed by using a radio resource control protocol (radio resource control, RRC) message or other unicast signaling. When the signal for initial access is broadcast, the signal for initial access may be uniformly configured for all terminal devices in a cell in a broadcast manner.

In a possible implementation, the third configuration information may be SMTC information. Typical periodicity values of the measurement periodicity in the third configuration information include 5 ms, 10 ms, 20 ms, 40 ms, 80 ms, and 160 ms.

The terminal device measures the cell #2 based on the third configuration information, and obtains a measurement result.

607: The terminal device sends the measurement result of the cell #2 to the network device #1.

Correspondingly, the network device #1 receives the measurement result of the cell #2 sent by the terminal device.

The measurement result includes one or more of the following: reference signal received strength, reference signal received quality, an elevation angle of the terminal device, and a distance between the terminal device and a reference point location of the first cell.

According to the method shown in FIG. 6, when a neighbor cell of the serving cell corresponding to the terminal device changes, and the changed neighbor cell and the serving cell are within coverage of a same network device, the terminal device determines, based on the first configuration information and the first activation information, whether the corresponding neighbor cell (for example, the cell #2) needs to be activated. This reduces signaling overheads for maintaining a neighbor cell relation in comparison with a conventional technology.

FIG. 7 is a schematic flowchart of another communication method according to an embodiment of this application.

701: A network device #2 sends first configuration information and first activation information to a network device #1.

Correspondingly, the network device #1 receives the first configuration information and the first activation information that are sent by the network device #2.

In a possible implementation, the network device #2 and the network device #1 may exchange the first configuration information and the first activation information through an Xn interface or an NG interface.

It should be understood that, considering that configuration information of a cell within coverage of a network device may not change in a long time period, the network device #1 and the network device #2 may alternatively exchange only the first activation information. The first configuration information may be preconfigured for a corresponding network device, and the network device #1 and the network device #2 do not need to exchange the first configuration information, so that signaling overheads are reduced.

702: The network device #1 sends the first configuration information and the first activation information to a terminal device.

Correspondingly, the terminal device receives the first configuration information and the first activation information that are sent by the network device #1.

It should be understood that when only the first activation information is exchanged between the network device #1 and the network device #2, the network device #1 sends the first activation information to the terminal device.

703: The terminal device sends first acknowledgment information to the network device #1.

Correspondingly, the network device #1 receives the first acknowledgment information sent by the terminal device.

Specifically, the first acknowledgment information indicates whether the terminal device receives the first configuration information from the network device #1, or the first acknowledgment information indicates whether the terminal device receives the first configuration information and the first activation information from the network device #1, or the first acknowledgment information indicates whether the terminal device receives the first activation information from the network device #1.

704: The terminal device determines, based on the first configuration information and the first activation information, whether to add a cell #2 to an active set.

Specifically, after the terminal device receives the first configuration information from the network device #1, the terminal device determines, based on the first configuration information and the first activation information, whether to add the cell #2 to the active set.

As the network device moves, the configuration information corresponding to the cell within the coverage of the network device may change. In this case, configuration information corresponding to the cell #2 may also change.

The network device #2 sends second configuration information to the network device #1, where the second configuration information includes the configuration information of the cell #2, and the configuration information of the cell #2 in the second configuration information is the same as or different from configuration information of the cell #2 in the first configuration information.

The network device #2 may periodically obtain the second configuration information, or the network device #2 may obtain the second configuration information under some preconfigured conditions, or the network device #2 may obtain the second configuration information based on some indication information. This is not specifically limited in this application.

Further, the network device #1 sends the received second configuration information to the terminal device, and the terminal device determines, based on the second configuration information and the first activation information, whether to add the cell #2 to the active set.

705: The terminal device sends first information to a cell #1.

Correspondingly, the cell #1 receives the first information from the terminal device.

Specifically, after the terminal device determines, based on the first configuration information and the first activation information, to add the cell #2 to the active set, the terminal device sends the first information to the cell #1. The first information indicates that the terminal device adds the cell #2 to the active set.

706: The network device #1 sends third configuration information to the terminal device.

Correspondingly, the terminal device receives the third configuration information from the network device #1.

The third configuration information is used by the terminal device to measure the cell #2, and the third configuration information includes a measurement periodicity and measurement duration.

It should be understood that when the cell #2 is a cell within coverage of the network device #2, and the cell #1 is a cell within coverage of the network device #1, the third configuration information may be used by the terminal device to perform inter-satellite neighbor cell measurement on the cell #2. The third configuration information may also be referred to as inter-satellite neighbor cell measurement.

It should be further understood that, when the cell #2 and the cell #1 are not within coverage of a same network device, the cell #2 and the cell #1 may be referred to as inter-satellite neighbor cells, and the measurement periodicity included in the third configuration information sent by the network device #1 is related to a broadcast signal for handover.

A signal for initial access may be broadcast, or may be of a terminal device UE level. When the signal for initial access is of the UE level, the signal for initial access may be separately configured for each terminal device in a unicast manner, and transmission of the signal for initial access may be performed by using a radio resource control protocol (radio resource control, RRC) message or other unicast signaling. When the signal for initial access is broadcast, the signal for initial access may be uniformly configured for all terminal devices in a cell in a broadcast manner.

In an example, the broadcast signal for handover is a mobility management specific synchronization signal block SSB, for example, a non-cell defining SSB (non-cell defining synchronization signal block, NCD-SSB). The NCD-SSB may be dynamically scheduled in time domain, frequency domain, polarization domain, or the like, and may be scheduled on demand, without being constrained by an SSB pattern.

In a possible implementation, the third configuration information may be SMTC information (for example, SMTC X). Typical periodicity values of the measurement periodicity in the third configuration information include: 1s, 5s, 10s, 20s, 40s, 80s, and 160s.

The terminal device measures the cell #2 based on the third configuration information, and obtains a measurement result.

707: The terminal device sends the measurement result of the cell #2 to the network device #1.

Correspondingly, the network device #1 receives the measurement result of the cell #2 sent by the terminal device.

The measurement result includes one or more of the following: reference signal received strength, reference signal received quality, an elevation angle of the terminal device, and a distance between the terminal device and a reference point location of a first cell.

According to the method shown in FIG. 7, when a neighbor cell of a serving cell corresponding to the terminal device changes, and the changed neighbor cell and the serving cell are not within coverage of a same network device, the network device #1 and the network device #2 exchange the first configuration information and the first activation information. The network device #1 sends the received first configuration information and first activation information to the terminal device, and the terminal device further determines whether the corresponding neighbor cell (for example, the cell #2) needs to be activated. In comparison with a conventional technology, in the communication method provided in this application, different network devices may exchange related information about cells within coverage, so that resource overheads for maintaining a neighbor cell relation can be reduced.

In addition, in a scenario in which the network device moves, configuration information of a cell may change, and the resource overheads caused by a change of the neighbor cell relation are further reduced by using the second configuration information.

In addition, for different neighbor cell types, for example, an intra-satellite neighbor cell and an inter-satellite neighbor cell, measurement configuration information in the third configuration information is different, so that measurement effectiveness of the terminal device is improved. When the neighbor cell and the serving cell are inter-satellite neighbor cells, a default SMTC measurement configuration is not used, so that resource waste caused by frequent measurement is reduced.

The methods shown in FIG. 6 and FIG. 7 mainly describe a method for maintaining the neighbor cell relation between the serving cell corresponding to the terminal device and the neighbor cell of the serving cell. FIG. 6 mainly describes how to reduce the resource overheads for maintaining the neighbor cell relation when the serving cell and the neighbor cell are within the coverage of the same network device, and how the terminal device sets configuration information related to the intra-satellite neighbor cell measurement. FIG. 7 mainly describes how to reduce the resource overheads for maintaining the neighbor cell relation when the serving cell and the neighbor cell belong to different network devices, and how the terminal device sets configuration information related to the inter-satellite neighbor cell measurement.

It should be understood that the methods shown in FIG. 5 to FIG. 7 are also applicable to a case in which a neighbor cell within coverage between satellites changes due to movement of a satellite. The following describes a method for maintaining the neighbor cell relation between satellites by using examples in Example 1 and Example 2.

Example 1

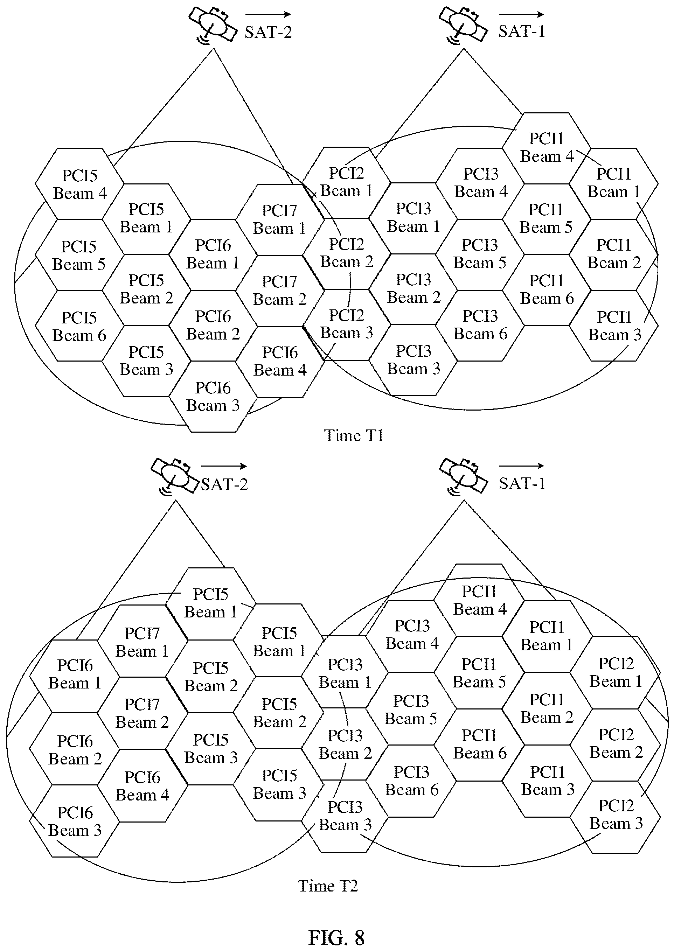

FIG. 8 is a diagram of a satellite cell relation at different moments.

It should be understood that a satellite-2 (a SAT-2 in FIG. 8) may send first configuration information and first activation information to a satellite-1 (a SAT-1 in FIG. 8).

The first configuration information sent by the satellite-2 may include the following information:
(1) PCI ID: PCI7, polarization/frequency: right-hand circular polarization/6 GHz, and measurement configurations: a periodicity of 20 ms, duration of 3 ms, an offset of 0 ms, and a priority 1 corresponding to a measurement frequency f1.
(2) PCI ID: PCI6, polarization/frequency: left-hand circular polarization/6.1 GHz, and measurement configurations: a periodicity of 80 ms, duration of 1 ms, an offset of 2 ms, and a priority 3 corresponding to a measurement frequency f2.
(3) PCI ID: PCI5, polarization/frequency: left-hand circular polarization/6.2 GHz, and measurement configurations: a periodicity of 160 ms, duration of 5 ms, an offset of 8 ms, and a priority 2 corresponding to a measurement frequency f3.

The first activation information sent by the satellite-2 may include the following information:

A cell cluster served by the satellite-1 is used as an example:
(1) At a moment T1, namely, Time T1, a neighbor cell PCI7 and configuration information corresponding to the neighbor cell PCI7 are activated.
   In an example, the first activation information exchanges active cell information with the SAT-1 by using a bitmap. For example, the first activation information exchanges 010 to indicate that a 2^{nd} cell (namely, the PCI7) in the SAT-2 is activated as a neighbor cell of the cell cluster within coverage of the SAT-1.
(2) At a moment T2, namely, Time T2, a neighbor cell PCI5 and configuration information corresponding to the neighbor cell PCI5 are activated.

In an example, the first activation information exchanges active cell information with the SAT-1 by using a bitmap. For example, the first activation information exchanges 001 to indicate that a 3^{rd} cell (namely, the PCI5) in the SAT-2 is activated as a neighbor cell of the cell cluster within the coverage of the SAT-1.

It should be understood that, the first activation information may further use an activation time period to represent an activation time period of a neighbor cell. For example, the first activation information includes a time period [t1, t2], where t1 is an activation start moment, and t2 is an activation end moment. Alternatively, the first activation information includes [t1, t1+t_offset], where t1 is an activation start moment, and t_offset is duration information representing activation time of the neighbor cell. Alternatively, the first activation information includes related information about a validity period timer Timer.

It should be further understood that the SAT-1 may further determine an activation manner of a cell within coverage of the SAT-2 based on a vector direction between the cell within the coverage of the SAT-2 and a cell within the coverage of the SAT-1 and a movement direction of the SAT-2.

In an example, the SAT-1 and the SAT-2 move from west to east, and an arrangement of cells within the coverage of the SAT-2 from west to east is a cell #1, a cell #2, ..., a cell #N-1, and a cell #N. For the SAT-1, activation priorities of the cells within the coverage of the SAT-2 may be in descending order, in other words, the cell #1 has a highest priority, and the cell #N has a lowest priority. It should be noted that, for different cells and/or different beams within the coverage of the SAT-1, the activation priorities of the cells in the SAT-2 may be different.

The SAT-1 updates, based on the first configuration information and the first activation information, a corresponding neighbor cell relation and configuration information corresponding to a neighbor cell.

### Example 2

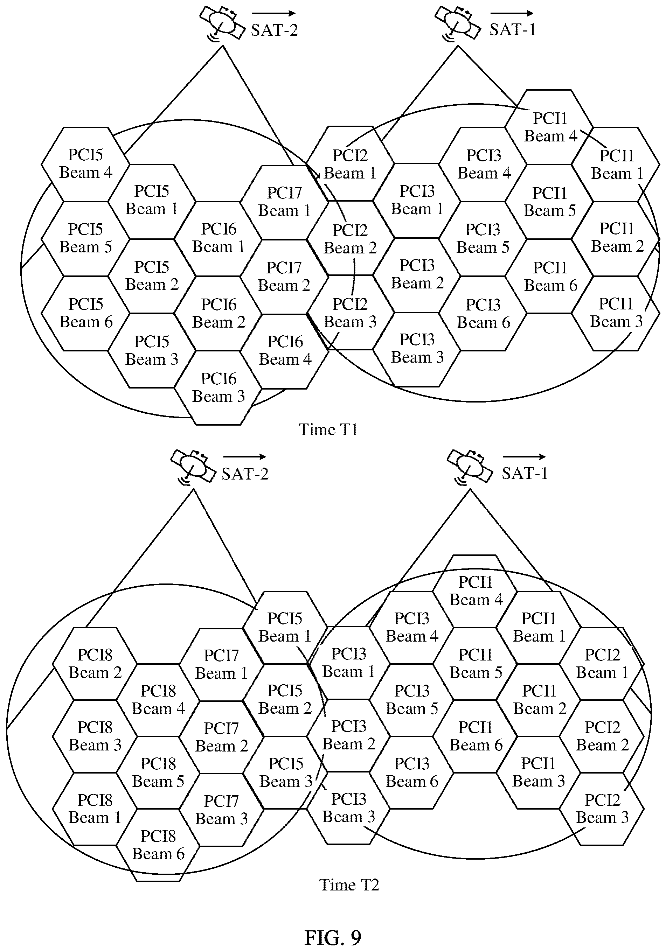

FIG. 9 is another diagram of a satellite cell relation at different moments.

It should be understood that a satellite-2 (a SAT-2 in FIG. 9) may send first configuration information and first activation information to a satellite-1 (a SAT-1 in FIG. 9).

The first configuration information sent by the satellite-2 at a moment T1 may include the following information:
(1) PCI ID: PCI7, polarization/frequency: right-hand circular polarization/6 GHz, and measurement configurations: a periodicity of 20 ms, duration of 3 ms, an offset of 0 ms, and a priority 1 corresponding to a measurement frequency f1.
(2) PCI ID: PCI6, polarization/frequency: left-hand circular polarization/6.1 GHz, and measurement configurations: a periodicity of 80 ms, duration of 1 ms, an offset of 2 ms, and a priority 3 corresponding to a measurement frequency f2.
(3) PCI ID: PCI5, polarization/frequency: left-hand circular polarization/6.2 GHz, and measurement configurations: a periodicity of 160 ms, duration of 5 ms, an offset of 8 ms, and a priority 2 corresponding to a measurement frequency f3.

Second configuration information sent by the satellite-2 at a moment T2 may include the following information:
(1) PCI ID: PCI8, polarization/frequency: left-hand circular polarization/6.55 GHz, and measurement configurations: a periodicity of 10 ms, duration of 3 ms, an offset of 10 ms, and a priority 5 corresponding to a measurement frequency f0.
(2) PCI ID: PCI7, polarization/frequency: right-hand circular polarization/6 GHz, and measurement configurations: a periodicity of 20 ms, duration of 3 ms, an offset of 0 ms, and a priority 1 corresponding to a measurement frequency f1.
(3) PCI ID: PCI5, polarization/frequency: left-hand circular polarization/6.3 GHz, and measurement configurations: a periodicity of 80 ms, duration of 5 ms, an offset of 8 ms, and a priority 4 corresponding to a measurement frequency f3.

It should be understood that, due to movement of a satellite, cell information within coverage of the satellite may change. At the moment T1, cells within coverage of the satellite-2 include the PCI7, the PCI6, and the PCI5. At the moment T2, cells within the coverage of the satellite-2 include the PCI8, the PCI7, and the PCI5. The satellite-2 sends updated cell information to the satellite-1.

At different moments, as a neighbor cell relation dynamically changes, a cell and configuration information corresponding to the cell in the first configuration information are dynamically activated.

A cell cluster served by the satellite-2 is used as an example:
(1) At the moment T2, namely, Time T2, the cell PCI7 may activate, based on the first activation information, the intra-satellite neighbor cell PCI8 and configuration information corresponding to the intra-satellite neighbor cell PCI5.

A cell cluster served by the satellite-1 is used as an example:
(1) At the moment T2, namely, Time T2, the neighbor cell PCI5 and configuration information corresponding to the neighbor cell PCI5 are activated.

It should be understood that, when the PCI8 is a neighbor cell of the satellite-1, the satellite-1 activates, based on the second configuration information and the first activation information, the neighbor cell PCI8 and the configuration information corresponding to the neighbor cell PCI8.

It should be further understood that the SAT-1 may further determine an activation manner of a cell within the coverage of the SAT-2 based on a vector direction between the cell within the coverage of the SAT-2 and a cell within coverage of the SAT-1 and a movement direction of the SAT-2.

It should be further understood that there are a plurality of manners of the first activation information, which are similar to the example in Example 1. Details are not described herein again.

The first activation information in Example 1 and Example 2 may further include status information of a cell in the SAT-2. The status information includes one or more of the following: an Xn status (corresponding to an interface between cells), a handover status (namely, an HO status), an NG status (corresponding to a status of an interface between a cell and a core network), a cell access status (for example, whether access is allowed), and the like.

It should be understood that, when the first activation information includes the status information of the cell, the first activation information may further include a valid time period of the status information of the cell. The valid time period may be a specified start moment and end moment, a frame length, a subframe length, a quantity of slots, a time snapshot sequence number, or the like. This is not specifically limited in this application.

In a possible implementation, the first activation information may further include a first condition. When the SAT-1 determines that a first event meets the first condition, the SAT-1 activates a corresponding cell within the coverage of the SAT-2. When the SAT-1 determines that a first event does not meet the first condition, the SAT-1 does not activate a corresponding cell within the coverage of the SAT-2.

It should be understood that the first event includes one or more of the following: A latitude location of the SAT-2 or a latitude location of a corresponding neighbor cell is greater than or equal to a threshold #3. A distance between a subsatellite point location of the SAT-2 and the reference point location or a distance between a subsatellite point location of the corresponding neighbor cell and the reference point location is greater than or equal to a threshold #4. A distance or a relative speed between the SAT-2 and the SAT-1 is greater than or equal to a threshold #5.

Values of the threshold #3, the threshold #4, and the threshold #5 may be predefined by a system, or may be determined by the system based on a network requirement. This is not specifically limited in this application.

According to the descriptions in Example 1 and Example 2, the communication method provided in this application is also applicable to maintenance of a neighbor cell relation between satellites. Through interaction of configuration information and activation information between satellites, frequent addition and/or deletion of a neighbor cell relation change are/is avoided, and signaling overheads are reduced.

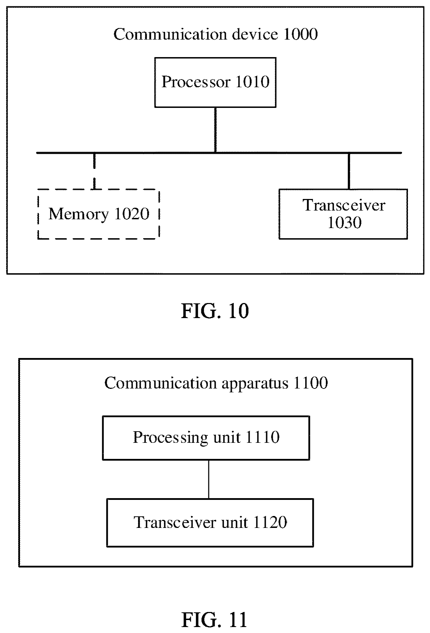

The foregoing describes in detail the communication methods provided in embodiments of this application with reference to FIG. 5 to FIG. 9. The following describes in detail communication apparatuses provided in embodiments of this application with reference to FIG. 10 and FIG. 11.

The communication apparatuses provided in embodiments of this application are described below in detail with reference to FIG. 10 and FIG. 11. It should be understood that descriptions of an apparatus embodiment correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 10 is a block diagram of a communication device 1000 according to this application. Any device like the terminal device and the network device in any method in FIG. 5 to FIG. 9 may be implemented by the communication device shown in FIG. 10.

It should be understood that the communication device 1000 may be a physical device, a component (for example, an integrated circuit or a chip) of the physical device, or may be a functional module in the physical device.

As shown in FIG. 10, the communication device 1000 includes one or more processors 1013. Optionally, the processor 1013 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented as a transceiver. Optionally, the communication device 1000 may further include a transceiver 1030. The transceiver 1030 may also be referred to as a transceiver unit, a transceiver machine, a transceiver circuit, or the like, and is configured to implement a transceiver function.

Optionally, the communication device 1000 may further include a memory 1020. A specific deployment location of the memory 1020 is not specifically limited in this embodiment of this application. The memory may be integrated into the processor, or may be independent of the processor. When the device 1000 does not include the memory, the device 1000 only needs to have a processing function, and the memory may be deployed at another location (for example, a cloud system).

The processor 1010, the memory 1020, and the transceiver 1030 communicate with each other through an internal connection path, to transfer a control signal and/or a data signal.

It may be understood that, although not shown, the device 1000 may further include other apparatuses, for example, an input apparatus, an output apparatus, and a battery.

Optionally, in some embodiments, the memory 1020 may store execution instructions used to perform the methods in embodiments of this application. The processor 1010 may execute the instructions stored in the memory 1020 and complete, in combination with other hardware (for example, the transceiver 1030), the steps performed in the following methods. For a specific working process and beneficial effects, refer to the descriptions in the foregoing method embodiments.

The methods disclosed in embodiments of this application may be applied to the processor 1010, or may be implemented by the processor 1010. The processor 1010 may be an integrated circuit chip and has a signal processing capability. In an implementation process, the steps of the methods may be performed through a hardware integrated logic circuit in the processor or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 1020 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and method described in this specification includes but is not limited to these and any memory of another appropriate type.

FIG. 11 is a block diagram of a communication apparatus 1100 according to this application. The apparatus 1100 includes a transceiver unit 1120, and the transceiver unit 1120 may be configured to implement a corresponding communication function. The transceiver unit 1120 may also be referred to as a communication interface or a communication unit.

Optionally, the apparatus 1100 may further include a processing unit 1110, and the processing unit 1110 may be configured to perform data processing.

Optionally, a specific form of the communication apparatus 1100 may be a general-purpose computer device or a chip in a general-purpose computer device. This is not limited in this embodiment of this application. As shown in FIG. 11, the apparatus includes the processing unit 1110 and the transceiver unit 1120.

Specifically, the communication apparatus 1100 may be any device in this application, and may implement a function that can be implemented by the device. It should be understood that the apparatus 1100 may be a physical device, a component (for example, an integrated circuit or a chip) of the physical device, or may be a functional module in the physical device.

In a possible design, the apparatus 1100 may be the terminal device (for example, the terminal device) in the foregoing method embodiments, or may be a chip configured to implement a function of the terminal device (for example, the terminal device) in the foregoing method embodiments.

Optionally, the apparatus 1100 further includes a storage unit. The storage unit may be configured to store instructions and/or data. The processing unit 1110 may read the instructions and/or the data in the storage unit, so that the apparatus implements actions of different terminal devices in the foregoing method embodiments, for example, actions of a control network element or the terminal device.

The apparatus 1100 may be configured to perform the actions performed by the control network element or the terminal device in the foregoing method embodiments. In this case, the apparatus 1100 may be the control network element or the terminal device, or a component of the control network element or the terminal device. The transceiver unit 1120 is configured to perform receiving/sending-related operations of the control network element or the terminal device in the foregoing method embodiments. The processing unit 1110 is configured to perform processing-related operations of the control network element or the terminal device in the foregoing method embodiments.

It should be understood that the apparatus 1100 may be configured to perform the actions performed by the control network element or the network device in the foregoing method embodiments. In this case, the transceiver unit 1120 in the apparatus 1100 may be implemented through a communication interface (for example, a transceiver or an input/output interface), for example, may correspond to the communication interface 1030 shown in FIG. 10. The processing unit 1110 in the apparatus 1100 may be implemented by using at least one processor, for example, may correspond to the processor 1010 shown in FIG. 10.

Optionally, the apparatus 1100 may further include the storage unit. The storage unit may be configured to store the instructions or the data. The processing unit may invoke the instructions or the data stored in the storage unit, to implement a corresponding operation.

It should be understood that a specific process in which the units perform the foregoing corresponding steps is described in detail in the foregoing method embodiments. For brevity, details are not described herein again.

It should be understood that a specific process in which the units perform the foregoing corresponding steps is described in detail in the foregoing method embodiments. For brevity, details are not described herein again.

In addition, in this application, the communication apparatus 1100 is presented in a form of a functional module. Herein, the "module" may be an application specific integrated circuit ASIC, a circuit, a processor that executes one or more software or firmware programs, a memory, an integrated logic circuit, and/or another component that can provide the foregoing functions. In a simple embodiment, a person skilled in the art may figure out that the apparatus 1100 may be in a form shown in FIG. 11. The processing unit 1110 may be implemented by using the processor 1010 shown in FIG. 10. Optionally, if the computer device shown in FIG. 10 includes the memory 1000, the processing unit 1110 may be implemented by using the processor 1010 and the memory 1000. The transceiver unit 1120 may be implemented by using the transceiver 1030 shown in FIG. 10. The transceiver 1030 includes a receiving function and a sending function. Specifically, the processor is implemented by executing a computer program stored in the memory. Optionally, when the apparatus 1100 is a chip, a function and/or an implementation process of the transceiver unit 1120 may be alternatively implemented by using a pin, a circuit, or the like. Optionally, the memory may be a storage unit in the chip, for example, a register or a cache. Alternatively, the storage unit may be a storage unit that is in the apparatus and that is located outside the chip, for example, the memory 1020 shown in FIG. 10, or may be a storage unit that is deployed in another system or device and that is not in the computer device.

Aspects or features of this application may be implemented as a method, an apparatus, or a product that uses standard programming and/or engineering technologies. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, include and/or carry instructions and/or data.

According to the methods provided in embodiments of this application, this application further provides a computer program product. The computer program product includes a computer program or a group of instructions. When the computer program or the group of instructions are run on a computer, the computer is enabled to perform the method in any one of the embodiments shown in FIG. 5 to FIG. 9.

According to the methods provided in embodiments of this application, this application further provides a computer-readable storage medium. The computer-readable storage medium stores a program or a group of instructions. When the program or the group of instructions are run on a computer, the computer is enabled to perform the method in any one of the embodiments shown in FIG. 5 to FIG. 9.

According to the methods provided in embodiments of this application, this application further provides a communication system, including the foregoing apparatus or device.

Terms such as "component", "module", and "system" used in this specification indicate computer-related entities, hardware, firmware, combinations of hardware and software, software, or software being executed. For example, the component may be, but is not limited to, a process that is run on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. The components may perform communication by using a local and/or remote process and based on, for example, a signal having one or more data packets (for example, data from two components interacting with another component in a local system, a distributed system, and/or across a network like the internet interacting with other systems by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be further understood that numbers such as "first" and "second" are introduced in embodiments of this application merely to distinguish between different objects, for example, distinguish between different "information", "devices", or "units". An understanding of a specific object and a correspondence between different objects should be determined based on functions and internal logic of the specific object, and should not constitute any limitation on the implementation process of embodiments of this application.

The protocol in this application may be a communication protocol or a specification, for example, a 3GPP communication protocol.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first communication apparatus, first activation information, wherein the first activation information comprises information used to activate a first cell, and the first cell is a neighbor cell of a serving cell of the first communication apparatus at a first moment; and
determining, by the first communication apparatus based on the first activation information and first configuration information, whether to add the first cell to an active set, wherein the first configuration information comprises configuration information of at least one cell within coverage of a first network device, and the at least one cell comprises the first cell.

2. The method according to claim 1, wherein determining, by the first communication apparatus based on the first configuration information and the first activation information, whether to add the first cell to the active set comprises:
determining, by the first communication apparatus based on the first configuration information and the first activation information, to add the first cell to the active set.

3. The method according to claim 1 or 2, wherein the method further comprises:
sending, by the first communication apparatus, first information to the serving cell, wherein the first information indicates that the first cell is added to the active set.

4. The method according to claim 2 or 3, wherein the method further comprises:
determining, by the first communication apparatus, an activation priority of the first cell based on a vector direction between the first cell and the serving cell and a movement direction of the first network device.

5. The method according to claim 4, wherein when an included angle between the vector direction and the movement direction of the first network device is less than or equal to a first threshold, the activation priority of the first cell is higher than an activation priority of a second cell, and a vector direction between the second cell and the serving cell and the movement direction of the first network device are greater than or equal to a second threshold.

6. The method according to any one of claims 1 to 5, wherein the method further comprises:
sending, by the first communication apparatus, a measurement result of the first cell to the first network device, wherein the measurement result comprises one or more of the following:
reference signal received strength, reference signal received quality, an elevation angle of the first communication apparatus, and a distance between the first communication apparatus and a reference point location of the first cell.

7. The method according to any one of claims 2 to 6, wherein the method further comprises:
receiving, by the first communication apparatus, second configuration information, wherein the second configuration information is used to update configuration information of the first cell.

8. The method according to any one of claims 1 to 7, wherein determining, by the first communication apparatus based on the first configuration information and the first activation information, whether to add the first cell to the active set comprises:
for a first condition further comprised in the first activation information,
when a first event meets the first condition, determining, by the first communication apparatus, to add the first cell to the active set; or when a first event does not meet the first condition, determining, by the first communication apparatus, not to add the first cell to the active set, wherein
the first event comprises one or more of the following:
a latitude location of the first network device or the first cell is greater than or equal to a third threshold; and
a distance between a subsatellite point location of the first network device or a subsatellite point location of the first cell and the reference point location is greater than or equal to a fourth threshold.

9. The method according to claim 8, wherein when the first network device is not a network device in the current serving cell of the first communication apparatus,
the first event further comprises:
a distance between the first network device and a second network device is less than or equal to a fifth threshold, wherein the second network device is a network device in the serving cell; and
a relative speed between the first network device and the second network device is less than or equal to a sixth threshold.

10. The method according to any one of claims 1 to 9, wherein the method further comprises:
receiving, by the first communication apparatus, third configuration information, wherein the third configuration information is used by the first communication apparatus to measure the first cell.

11. A communication method, comprising:
obtaining, by a serving network device, first configuration information and first activation information; and
sending, by the serving network device, the first configuration information and the first activation information, wherein the first configuration information comprises configuration information of at least one cell within coverage of a first network device, the first activation information comprises information used to activate a first cell, the first cell is a neighbor cell of a serving cell of a first communication apparatus at a first moment, and the at least one cell comprises the first cell.

12. The method according to claim 11, wherein the method further comprises:
receiving, by the serving network device, first acknowledgment information, wherein the first acknowledgment information indicates whether the first configuration information and/or the first activation information are/is received.

13. The method according to claim 11 or 12, wherein the method further comprises:
receiving, by the serving network device, a measurement result of the first cell from the first communication apparatus, wherein
the measurement result comprises one or more of the following:
reference signal received strength, reference signal received quality, an elevation angle of the first communication apparatus, and a distance between the first communication apparatus and a reference point location of the first cell.

14. The method according to any one of claims 11 to 13, wherein the method further comprises:
obtaining, by the serving network device, second configuration information; and
sending, by the serving network device, the second configuration information, wherein the second configuration information is used to update configuration information of the first cell.

15. The method according to any one of claims 11 to 14, wherein the first activation information further comprises a first condition; and
when a first event meets the first condition, the first activation information indicates to add the first cell to an active set; or when a first event does not meet the first condition, the first activation information indicates not to add the first cell to an active set, wherein
the first event comprises one or more of the following:
a latitude location of the first network device or the first cell is greater than or equal to a third threshold; and
a distance between a subsatellite point location of the first network device or a subsatellite point location of the first cell and the reference point location is greater than or equal to a fourth threshold.

16. The method according to claim 15, wherein when the first network device is different from the serving network device, the first event further comprises:
a distance between the first network device and the serving network device is less than or equal to a fifth threshold; and
a relative speed between the first network device and the serving network device is less than or equal to a sixth threshold.

17. The method according to any one of claims 11 to 16, wherein the method further comprises:
sending, by the serving network device, third configuration information, wherein the third configuration information is used by the terminal device to measure the first cell.

18. The method according to any one of claims 1 to 17, wherein configuration information of each of the at least one cell comprises one or more of the following:
cell identification information, cell frequency information, cell polarization information, measurement configuration information, and ephemeris-related information, wherein
the cell frequency information and/or the cell polarization information comprise/comprises one or more of the following:
linear polarization information, circular polarization information, and elliptical polarization information;
the measurement configuration information comprises one or more of the following:
a synchronization signal block-based measurement timing configuration SMTC periodicity, SMTC duration, an SMTC offset, a measurement gap configuration, a neighbor cell measurement priority, a frequency priority, and a polarization priority; and
the ephemeris-related information comprises one or more of the following:
an ephemeris validity period, an ephemeris, cell service time, a cell reference point location, common timing advance information, and a cell service elevation angle.

19. The method according to any one of claims 1 to 18, wherein the first activation information comprises a bitmap, a first bit in the bitmap corresponds to the first cell, and
when a value of the first bit is a first value, the first bit indicates to add the first cell to the active set.

20. The method according to any one of claims 1 to 19, wherein the first activation information further comprises a first offset of the first moment or a current moment, and the first moment is a start moment for activating the first cell.

21. The method according to any one of claims 1 to 20, wherein the first activation information further comprises a second moment or activation duration, the second moment is an end moment for activating the first cell, and the activation duration is used to determine the second moment.

22. The method according to any one of claims 1 to 21, wherein the first activation information further comprises status information of the first cell, wherein
the status information comprises one or more of the following:
a status of an Xn interface, a handover HO status, a status of an NG interface between a cell and a core network, and a cell access status.

23. The method according to claim 10 or 17, wherein the third configuration information comprises a measurement periodicity and measurement duration, wherein
when the first network device is a network device in the current serving cell of the first communication apparatus, the measurement periodicity is related to a broadcast signal for initial access; or
when the first network device is not a network device in the current serving cell of the first communication apparatus, the measurement periodicity is related to a broadcast signal for handover.

24. The method according to any one of claims 10, 17, and 23, wherein
the third configuration information is synchronization signal block-based measurement timing configuration SMTC information.

25. A communication apparatus, comprising:
a processor and a memory, wherein
the processor is configured to execute a computer program stored in the memory, to enable the communication apparatus to perform the method according to any one of claims 1 to 10 or any one of claims 18 to 24, or perform the method according to any one of claims 11 to 24.

26. A computer-readable storage medium, wherein the computer-readable storage medium stores a computer program, and when the computer program is run on a computer, the computer is enabled to perform the method according to any one of claims 1 to 10 or any one of claims 18 to 24, or perform the method according to any one of claims 11 to 24.

27. A chip system, comprising a processor, configured to: invoke a computer program from a memory, and run the computer program, to enable a grant-free resource configuration device on which the chip system is installed to perform the method according to any one of claims 1 to 10 or any one of claims 18 to 24, or perform the method according to any one of claims 11 to 24.

28. A communication system, comprising a terminal device and a network device, wherein the terminal device is configured to perform the method according to any one of claims 1 to 10 or the method according to any one of claims 18 to 24, and the network device is configured to perform the method according to any one of claims 11 to 24.
